# EUROPEAN PATENT APPLICATION

(11) **EP 1 855 431 A2**
(43) Date of publication of application: **14.11.2007**
(21) Application number: 07009181.4
(22) Date of filing: 07.05.2007
(51) Int. Cl.: H04L 12/58

(54) **Mobile communication system, mobile terminal, mail server, and electronic mail reception-limiting method**

(30) Priority: 12.05.2006 JP 2006134102
(71) Applicant: NEC Corporation, Minato-ku Tokyo (JP)
(72) Inventor: Kato, Ayako, Minato-ku Tokyo 108-8001 (JP)
(74) Representative: Glawe, Delfs, Moll

(57) **Abstract**

When electronic mail is received in a reception mail server (30) and a relay-limiting management module (32) of the reception mail server (30) manages the mail address of the transmission destination of the electronic mail that has been transmitted in as a limiter's address, relay control module (31) of reception mail server (30) transmits this electronic mail to the mobile terminal of the transmission destination only when the mail address of the transmission origin of this electronic mail is also managed as a reception-permitted address placed in association with the limiter's address, whereby electronic mail is selectively received according to conditions that are set.

## Description

This application is based upon and claims the benefit of priority from Japanese Patent Application No. 2006-134102 filed on May 12, 2006, the content of which is incorporated by reference.

### Background of the Invention

### 1. Field of the Invention:

The present invention relates to mobile communication system, and more particularly to a technology for limiting the reception of electronic mail.

### 2. Description of the Related Art:

The convenience of a portable telephone lies in its ability to receive electronic mail that arrives at any time the power supply of the terminal is ON and the terminal is within reception range of electromagnetic waves. Basically, the terminal is set to allow automatic reception of electronic mail once the user turns ON the power supply of the terminal. However, when all electronic mail addressed to that terminal is received even though little battery power remains and the terminal is not in an environment that allows charging, the danger arises that the battery power will be exhausted when the terminal is needed for use, preventing the use of the portable telephone for communication. Many users are afraid of being left unable to communicate due to exhausted power supply.

In such cases, users implement various solutions in the hopes of preventing exhaustion of the battery while the terminal is in a state that allows reception of electronic mail. For example, users turn OFF functions that might exhaust the battery. Functions that can be considered for turning OFF include illumination and vibration alerts. In some cases, a user might turn OFF the power supply, and then feeling some concern, turn ON the power supply to check regarding the reception state of electronic mail, but this operation only speeds the exhaustion of the battery if necessary electronic mail has not arrived.

It can be expected that users in such a situation would desire the ability to receive necessary electronic mail while suppressing the exhaustion of the battery when the power supply of the terminal is ON.

Portable telephones have been considered in which communication functions are shut down and other operations are continued when little battery power remains, one example being disclosed in JP-A-2002-199092.

However, the device disclosed in JP-A-2002-199092 has the drawback that shutting down communication functions when little battery power remains also prevents the reception of electronic mail from desired partners among electronic mail addressed to that terminal.

### Summary of the Invention:

It is an object of the present invention to provide a mobile communication system, a mobile terminal, a mail server and an electronic mail reception-limiting method that enable the selective reception of electronic mail according to conditions that are set.

To achieve the above-described object, the present invention includes:
a plurality of mobile terminals; and
a mail server for relaying electronic mail that is transmitted and received among the plurality of mobile terminals;
wherein each of the mobile terminals includes:
reception-limiting control means for managing mail addresses of electronic mail for which reception is permitted according to conditions that are set; and
reception-limiting notification means for transmitting to the mail server a reception-limiting start notification together with the mail address of that mobile terminal and mail addresses that are managed in the reception-limiting control means when the conditions have been satisfied, and transmitting to the mail server a reception-limiting release notification together with the mail address of that mobile terminal when the conditions are no longer satisfied;
the mail server includes:
   a relay-limiting management means for managing by placing in correspondence in a reception-limiting list: as a limiter's address, the mail address of the mobile terminal that was transmitted together with the reception-limiting start notification from the reception-limiting notification means, and as reception-permitted addresses, mail addresses that are managed by the reception-limiting control means and that were transmitted in together with the reception-limiting start notification; and
   a relay control means for, when the mail address of a transmission destination of electronic mail that has been transmitted in from a mobile terminal is managed in the reception-limiting list as a limiter's address, transmitting the electronic mail to the mobile terminal of the transmission destination only when the mail address of the transmission origin of the electronic mail is managed as a reception-permitted address that has been placed in correspondence with the limiter's address in the reception-limiting list; and
   the relay-limiting management means, when a reception-limiting release notification has been transmitted in from the reception-limiting notification means, deletes the mail address of the mobile terminal that was transmitted in together with the reception-limiting release notification and the reception-permitted addresses that were placed in correspondence with that mail address from the reception-limiting list.

In the present invention of the configuration described above, the mail addresses of electronic mail for which reception is permitted according to set conditions are managed in the reception-limiting control means of mobile terminals. When conditions that have been set are satisfied, a reception-limiting start notification is transmitted from the reception-limiting notification means of the mobile terminal to the mail server together with the mail address of that mobile terminal and the mail addresses that are managed in the reception-limiting control means. In the mail server, these addresses are managed in association with each other in a reception-limiting list in the relay-limiting management means, the mail address of the mobile terminal that has been transmitted in together with the reception-limiting start notification from the reception-limiting notification means being managed as the limiter's address and the mail addresses that are managed in the reception-limiting control means and that have been transmitted in together with the reception-limiting start notification being managed as the reception-permitted addresses. When the mail address of the transmission destination of electronic mail that is transmitted in from a mobile terminal is managed in the reception-limiting list as a limiter's address, the relay control means transmits this electronic mail to the transmission destination mobile terminal only when the mail address of the transmission origin of this electronic mail is managed as a reception-permitted address that has been placed in correspondence with the limiter's address in the reception-limiting list. Subsequently, when the set conditions are no longer satisfied, a reception-limiting release notification from the reception-limiting notification means is transmitted to the mail server together with the mail address of that mobile terminal. When the reception-limiting release notification is transmitted in from the reception-limiting notification means, the relay-limiting management means of the mail server deletes from the reception-limiting list the mail address of the mobile terminal that was transmitted in together with the reception-limiting release notification and the reception-permitted addresses that were placed in correspondence with that mail address.

Electronic mail other than electronic mail that is managed as reception-permitted is thus not received according to conditions that have been set in mobile terminals, and a user is therefore able to receive electronic mail from selected senders while limiting the reception of electronic mail according to the state of the mobile terminal.

The above and other objects, features, and advantages of the present invention will become apparent from the following description with reference to the accompanying drawings, which illustrate examples of the present invention.

### Brief Description of the Drawings:

FIG. 1 shows an embodiment of the mobile communication system of the present invention;
FIG. 2 shows the configuration of a mobile terminal shown in FIG. 1;
FIG. 3 shows a settings screen of a mobile terminal when setting the reception limits of electronic mail in the mobile terminal shown in FIG. 1 and FIG. 2;
FIG. 4 shows a table that is set in the reception-limiting control module of the mobile terminal by the process shown in FIG. 3;
FIG. 5 is a diagram for explaining the process when setting reception limits in a reception mail server when "remaining battery power 2" has been selected as the remaining battery power that serves as the trigger for starting reception limiting in the mobile communication system shown in FIG. 1 and FIG. 2;
FIG. 6 shows an example of a reception-limiting list that is managed in the relay-limiting management module of the reception mail server shown in FIG. 1; and
FIG. 7 is a diagram for explaining the process when electronic mail is transmitted between mobile terminals in the mobile communication system shown in FIG. 1.

### Detailed Description of the Preferred Embodiments:

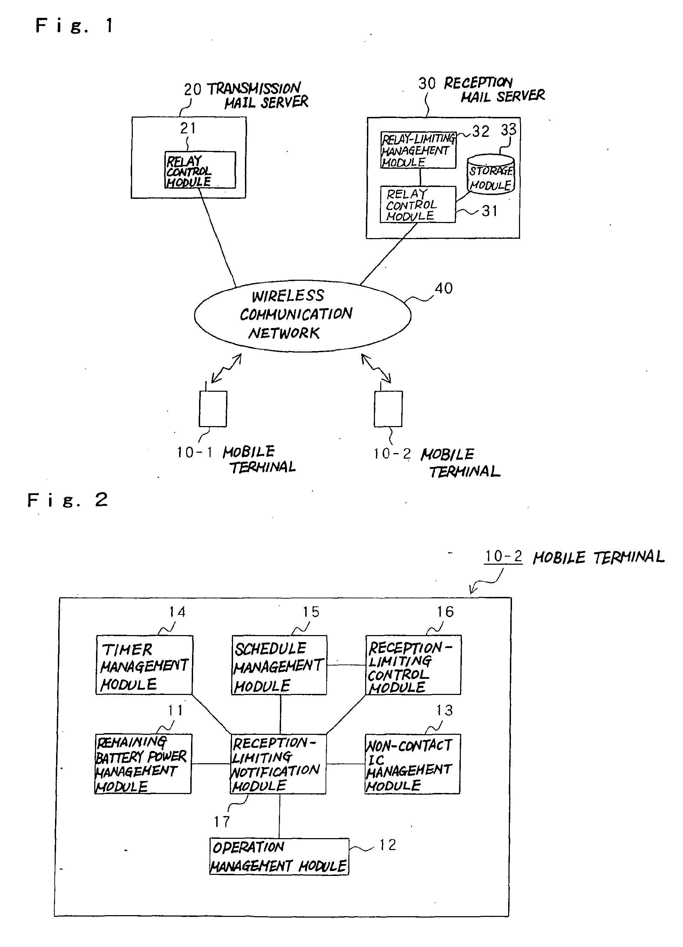

FIG. 1 shows an embodiment of the mobile communication system of the present invention. FIG. 2 shows the configuration of mobile terminal 10-2 shown in FIG. 1.

As shown in FIG. 1, the present embodiment is of a configuration in which mobile terminals 10-1 and 10-2 and transmission mail server 20 and reception mail server 30 for relaying electronic mail that is transmitted and received between mobile terminals 10-1 and 10-2 can connect by way of wireless communication network 40. In the present embodiment, mobile terminal 10-1 is assumed to be the transmission origin of electronic mail, mobile terminal 10-2 is assumed to be the transmission destination of electronic mail, and only two mobile terminals 10-1 and 10-2 are shown, but a plurality of mobile terminals transmit and receive electronic mail by way of transmission mail server 20 and reception mail server 30.

As shown in FIG. 2, mobile terminal 10-2 is made up from: reception-limiting control module 16, reception-limiting notification module 17, remaining battery power management module 11, operation management module 12, non-contact IC management module 13, timer management module 14 and schedule management module 15.

Reception-limiting control module 16 manages mail addresses of electronic mail for which reception can be permitted according to conditions that have been set in advance in remaining battery power management module 11, operation management module 12, non-contact IC management module 13, timer management module 14, and schedule management module 15. In addition, reception-limiting control module 16 manages the mail addresses of electronic mail for which reception can be permitted in accordance with a schedule that is managed in schedule management module 15.

When conditions are satisfied that have been set in advance in remaining battery power management module 11, operation management module 12, non-contact IC management module 13, timer management module 14, and schedule management module 15, reception-limiting notification module 17 transmits to reception mail server 30 a reception-limiting start notification together with the mail address of mobile terminal 10-2 and mail addresses that are managed in reception-limiting control module - 16, and when conditions are no longer satisfied, transmits to reception mail server 30 a reception-limiting release notification together with the mail address of mobile terminal 10-2.

Remaining battery power management module 11 monitors the remaining battery power of mobile terminal 10-2, notifies reception-limiting notification module 17 when the remaining battery power falls below a predetermined threshold value, and further, notifies reception-limiting notification module 17 when charging starts. As a result, reception-limiting notification module 17 transmits a reception-limiting start notification to reception mail server 30 upon being notified from remaining battery power management module 11 that the remaining battery power has fallen below a predetermined threshold value, and further, transmits a reception-limiting release notification to reception mail server 30 upon being notified from remaining battery power management module 11 that charging has started.

Operation management module 12 is a device for managing the operation state for mobile terminal 10-2, and notifies reception-limiting notification module 17 of the input of information to mobile terminal 10-2 and the start and end of operation. As a result, when notified from operation management module 12 of the input of a first item of information to mobile terminal 10-2, reception-limiting notification module 17 transmits a reception-limiting start notification to reception mail server 30, and when notified from operation management module 12 of the input of a second item of information to mobile terminal 10-2, reception-limiting notification module 17 transmits a reception-limiting release notification to reception mail server 30. When notified from operation management module 12 of the start of a prescribed operation upon mobile terminal 10-2, reception-limiting notification module 17 transmits a reception-limiting start notification to reception mail server 30, and when notified from operation management module 12 of the completion of a prescribed operation upon mobile terminal 10-2, reception-limiting notification module 17 transmits a reception-limiting release notification to reception mail server 30.

Non-contact IC management module 13 is a component for managing the entrance to or exit from a location by means of non-contact communication, and notifies reception-limiting notification module 17 of the entrance to or exit from a location by the user that possesses mobile terminal 10-2. Thus, when notified from non-contact IC management module 13 that the user that possesses mobile terminal 10-2 has entered a location, reception-limiting notification module 17 transmits a reception-limiting start notification to reception mail server 30, and when notified from non-contact IC management module 13 that the user that possesses mobile terminal 10-2 has exited from the location, reception-limiting notification module 17 transmits a reception-limiting release notification to reception mail server 30.

Timer management module 14 is a component for managing the ON/OFF of a timer. Reception-limiting notification module 17 thus transmits a reception-limiting start notification to reception mail server 30 at the time the timer managed by timer management module 14 turns ON, and transmits a reception-limiting release notification to reception mail server 30 at the time the timer managed by timer management module 14 turns OFF.

Schedule management module 15 is a component for managing schedules. Reception-limiting notification module 17 thus transmits a reception-limiting start notification to reception mail server 30 at the starting time of a schedule that has been determined in advance from among schedules managed in schedule management module 15. Reception-limiting notification module 17 further transmits a reception-limiting release notification to reception mail server 30 at the end time of the predetermined schedule.

As shown in FIG. 1, transmission mail server 20 is further provided with relay control module 21 for transmitting to reception mail server 30 electronic mail addressed to mobile terminal 10-2 that has been transmitted in from mobile terminal 10-1.

As shown in FIG. 1, reception mail server 30 is made up from: relay-limiting management module 32, relay control module 31, and storage module 33.

Relay-limiting management module 32 manages as a limiter's address the mail address of mobile terminal 10-2 that has been transmitted in together with a reception-limiting start notification from reception-limiting notification module 17 of mobile terminal 10-2, and further, manages as reception-permitted addresses the mail addresses that are managed in reception-limiting control module 16 and that have been transmitted in together with the reception-limiting start notification, relay-limiting management module 32 managing these addresses in association with each other in a reception-limiting list.

When the mail address of the transmission destination of electronic mail that has been transmitted in from a mobile terminal is managed in the reception-limiting list as a limiter's address, relay control module 31 transmits this electronic mail to the mobile terminal of the transmission destination only when the mail address of the transmission origin of the electronic mail is managed as a reception-permitted address that is placed in correspondence with the limiter's address in the reception-limiting list. Further, when the mail address of the transmission destination of electronic mail that has been transmitted in from a mobile terminal is managed in the reception-limiting list as a limiter's address, and moreover, the mail address of the transmission origin of this electronic mail is not managed as a reception-permitted address that is placed in correspondence with the limiter's address in the reception-limiting list, relay control module 31 stores this electronic mail in storage module 33, and then transmits the electronic mail stored in storage module 33 to the mobile terminal that is the transmission destination when a reception-limiting release notification is transmitted in from reception-limiting notification module 17 of the mobile terminal.

When a reception-limiting release notification is transmitted in from reception-limiting notification module 17 of mobile terminal 10-2, relay-limiting management module 32 deletes from the reception-limiting list the mail address of mobile terminal 10-2 that was transmitted in together with the reception-limiting release notification and the reception-permitted addresses that were placed in correspondence with that mail address.

In a mobile communication system of the above-described configuration, electronic mail transmitted from mobile terminal 10-1 arrives at transmission mail server 20 by way of wireless communication network 40. In transmission mail server 20, reception mail server 30 is determined by means of the destination mail address and the electronic mail is then transmitted. Reception mail server 30 transmits the electronic mail to mobile terminal 10-2 based on the destination address.

Explanation next regards the method of limiting the reception of electronic mail in the above-described mobile communication system.

Explanation first regards the process when a user sets the limitations of reception of electronic mail in mobile terminal 10-2.

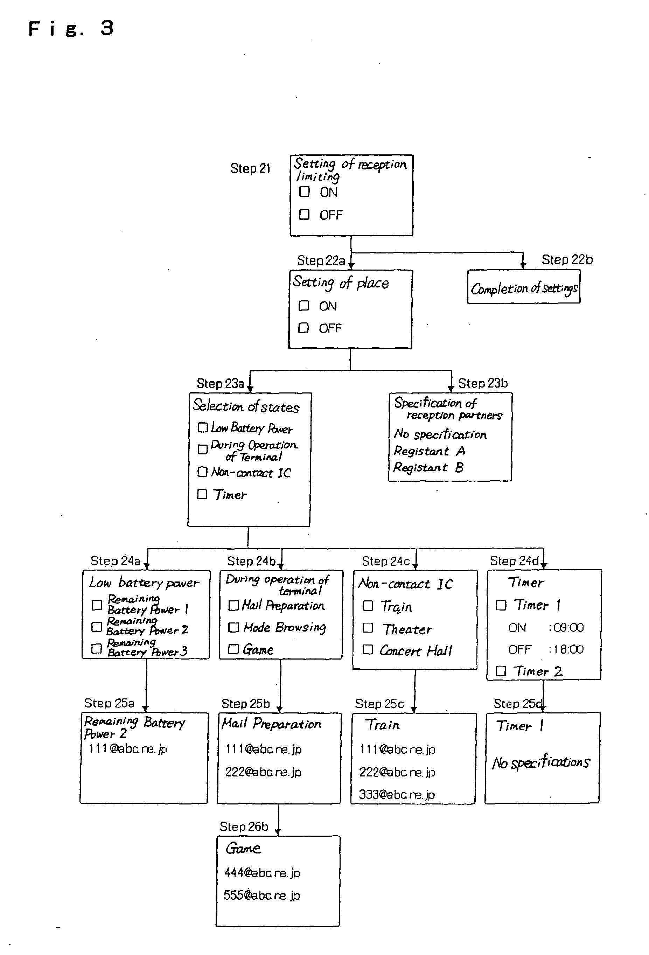

FIG. 3 shows a settings screen of mobile terminal 10-2 when setting the reception limits of electronic mail in mobile terminal 10-2 that is shown in FIGs. 1 and 2.

First, in Step 21, the user opens the reception-limiting settings screen and selects ON or OFF for limiting the reception of electronic mail.

When ON has been selected for reception limiting in Step 21, the user selects ON or OFF for the state settings of electronic mail reception limiting in Step 22a.

Alternatively, when OFF has been selected for reception limiting in Step 21, the user's settings are completed in Step 22b.

When ON has been selected for state settings in Step 22a, the user next selects the state for setting electronic mail reception limiting in Step 23a. States for setting reception limiting that can be selected here include states that depend on the remaining battery power, states that depend on operations upon the terminal, states that depend on the non-contact IC function, and states that depend on the timer.

In Step 23b, if OFF has been selected as the state setting in Step 22a, the user's settings are completed, or the specification of the reception partners during limiting is carried out.

When a state that depends on the remaining battery power has been selected as the state for setting reception limiting in Step 23a, the remaining battery power that serves as the trigger for starting reception limiting is selected in Step 24a. In the present embodiment, it will be assumed that "Remaining Battery Power 2" is selected as the remaining battery power that serves as a trigger for starting reception limiting.

When a state that depends on terminal operations has been selected as the state for setting reception limiting in Step 23a, the type of terminal operation that serves as trigger for starting reception limiting is next selected in Step 24b. In the present embodiment, it is assumed that "Mail Preparation" and "Game" have been selected as operations of a terminal that initiate reception limiting.

When a state that depends on non-contact IC functions has been selected as the state for setting reception limiting in Step 23a, public spaces that serve as the trigger for starting reception limiting are selected in Step 24c. In the present embodiment, it is assumed that "Train" is selected as the public space that serves as a trigger for initiating reception limiting.

When a state that depends on the timer has been selected as the state for setting reception limiting in Step 23a, the time that serves as the trigger for initiating reception limiting is designated in Step 24d. In the present embodiment, it is assumed that "9:00-18:00" has been set as the time that serves as the trigger for starting reception limiting.

In Step 25a, the user sets 111 @abc.ne.jp as the mail address for which reception is permitted when the reception limiting has been set due to "Remaining Battery Power 2."

In Step 25b, the user sets 111 @abc.ne.jp and 222@abc.ne.jp for the mail addresses for which reception is permitted when reception limiting has been set according to the operation "Mail Preparation." Alternatively, in Step 26b, the user sets 444@abc.ne.jp and 555@abc.ne.jp for the mail addresses for which reception is permitted when reception limiting has been set according to the operation "Game." -

Alternatively, in Step 25c, the user enters "Train" and sets 111@abc.ne.jp, 222@abc.ne.jp, and 333@abc.ne.jp for the mail addresses for which reception is permitted when reception limiting is set.

Alternatively, in Step 25d, the user does not specify a partner when setting reception limiting according to the set time of the "Timer" and thus opts not to receive any mail.

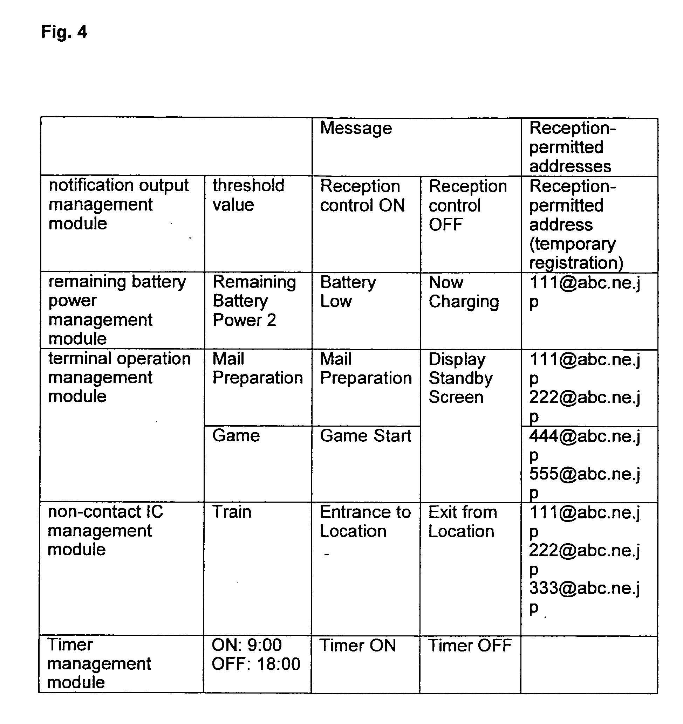

FIG. 4 shows a table that is set in reception-limiting control module 16 of mobile terminal 10-2 by the process shown in FIG. 3, this table being an example in which the user has placed in correspondence: the names of management modules that supply notification, the threshold values that serve as triggers for starting limiting that have been set by the user, messages that are notified by each management module (ON/OFF), and the mail addresses of partners for which reception is permitted that have been set by the user.

In reception-limiting control module 16 of mobile terminal 10-2, a table such as shown in FIG. 4 is set by the process shown in FIG. 3. Managing addresses for which reception is permitted according to a schedule that is managed in schedule management module 15 can also be considered. For example, settings can be considered whereby only the reception of electronic mail from clients is permitted during a meeting, or only reception of electronic mail from family members is permitted when traveling by rail.

When "Remaining Battery Power 2" is set as a threshold value and the remaining battery power falls below this threshold value, remaining battery power management module 11 communicates the message "Battery Low" to reception-limiting notification module 17. Reception-limiting notification module 17 uses this table to determine that the message "Battery Low" is a message to turn ON reception limiting. In this case, 111@abc.ne.jp is the mail address for which reception is permitted.

When "Mail Preparation" and "Game" have been set as the threshold values and one of these operations commences, operation management module 12 reports the message "Mail Preparation" or "Game Start" to reception-limiting notification module 17. Reception-limiting notification module 17 uses this table to determine that these messages indicate turning ON reception limiting. In this case, the mail addresses for which reception is permitted are 111 @abc.ne.jp and 222@abc.ne.jp for "Mail Preparation" and 444@abc.ne.jp and 555@abc.ne.jp for "Game."

When "Train" has been set as the threshold value and non-contact IC management module 13 receives the message "Entrance to Location," reception-limiting notification module 17 uses this table to determine that this message indicates turning ON reception limiting. In this case, the mail addresses for which reception is permitted are 111@abc.ne.jp, 222@abc.ne.jp, and 333@abc.ne.jp.

When "ON: 9:00" and "OFF: 18:00" have been set as threshold values and the time is 9:00, timer management module 14 transmits the message "Timer ON" to reception-limiting notification module 17. Reception-limiting notification module 17 uses the table to determine that this message indicates turning ON reception limiting. In this case, no mail addresses have been specified for permitted reception, and electronic mail from all mail addresses is therefore limitted.

Explanation next regards the process when setting reception limiting in reception mail server 30 when "Remaining Battery Power 2" has been selected as the remaining battery power that serves as the trigger for starting reception limiting in Step 24a shown in FIG. 3.

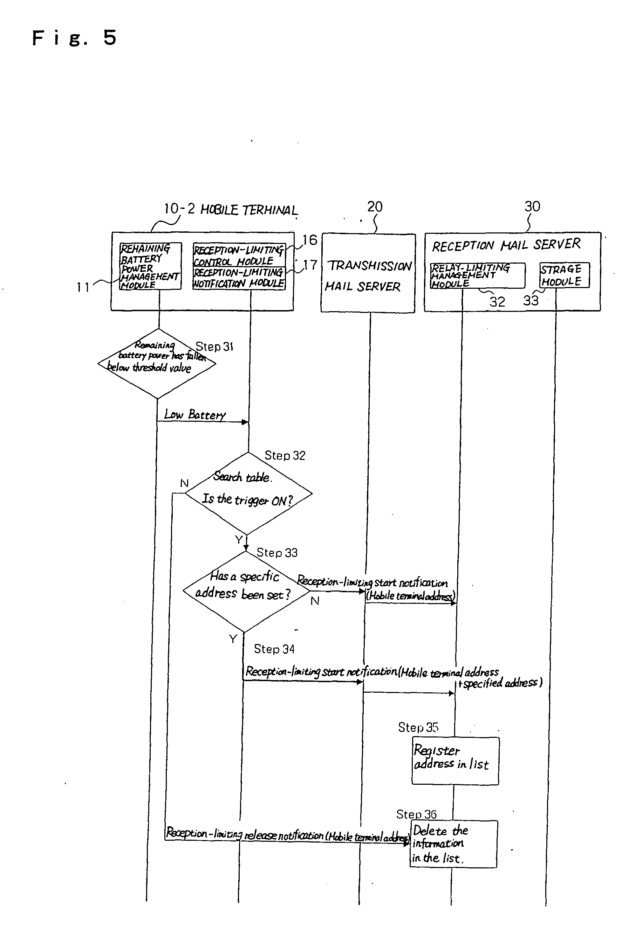

FIG. 5 is a view for explaining the process when setting reception limiting in reception mail server 30 when "Remaining Battery Power 2" has been selected as the remaining battery power that serves as a trigger for starting reception limiting in the mobile communication system shown in FIGs. 1 and 2.

First, in Step 31, remaining battery power management module 11 monitors the remaining battery power of mobile terminal 10-2 and sends the message "Battery Low" to reception-limiting notification module 17 at the time that the remaining power falls below threshold value 2 that has been set.

In Step 32, reception-limiting notification module 17 of mobile terminal 10-2 uses the table shown in FIG. 4 to detect whether the trigger from remaining battery power management module 11 indicates turning reception limiting ON or OFF. In this case, the trigger indicates ON. When the trigger indicates OFF, reception-limiting notification module 17 sends the mail address of mobile terminal 10-2 together with the reception-limiting release notification to reception mail server 30.

In Step 33, reception-limiting notification module 17 of mobile terminal 10-2 uses the table shown in FIG. 4 to check for the existence of mail addresses that have been designated by the user. In this case, the address 111@abc.ne.jp has been set. When there is no mail address that has been designated by the user, reception-limiting notification module 17 sends only the reception-limiting start notification to reception mail server 30.

In Step 34, reception-limiting notification module 17 of mobile terminal 10-2 transmits to reception mail server 30 the mail address of mobile terminal 10-2 and the mail address set in the table shown in FIG. 4 together with the reception-limiting start notification when a mail address designated by the user is set in the table shown in FIG. 4.

In Step 35, relay-limiting management module 32 registers and manages in association in the reception-limiting list: the mail address of mobile terminal 10-2 that has transmitted in the reception-limiting start notification as a limiter's address and the mail address that is set in the table shown in FIG. 4 and that was transmitted in together with this mail address as a reception-permitted address.

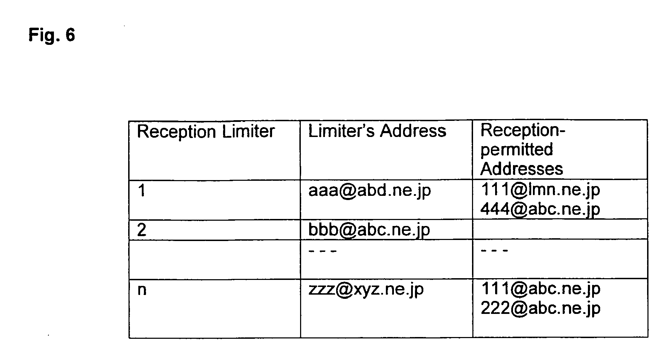

FIG. 6 shows an example of the reception-limiting list that is managed in relay-limiting management module 32 of reception mail server 30 shown in FIG. 1.

In the example shown in FIG. 6, the first mobile terminal has the mail address aaa@abc.ne.jp. This mail address is managed as a limiter's address, and 111@Imn.ne.jp and 444@abc.ne.jp are managed as reception-permitted addresses that are associated with this address. The first mobile terminal is in a state for receiving only electronic mail from these reception-permitted addresses and not receiving electronic mail from other addresses.

The second mobile terminal has the mail address bbb@abc.ne.jp. This mail address is managed as a limiter's address, and the second mobile terminal is in a state for not receiving electronic mail.

When a reception-limiting release notification is transmitted in from mobile terminal 10-2, relay-limiting management module 32 of reception mail server 30 deletes from the reception-limiting list the mail address of mobile terminal 10-2 that has been transmitted in with the reception-limiting release notification and the reception-permitted addresses that have been placed in correspondence with this mail address in Step 36. This reception-limiting release notification can be transmitted to reception mail server 30 when reception-limiting notification module 17 is notified from remaining battery power management module 11 that charging of mobile terminal 10-2 has started.

In the above-described process, a reception-limiting start notification and a reception-limiting release notification are transmitted from reception-limiting notification module 17 to reception mail server 30 based on the remaining battery power of mobile terminal 10-2 that is managed in remaining battery power management module 11 and a reception-limiting list such as shown in FIG. 6 is set in relay-limiting management module 32 in reception mail server 30, but a reception-limiting list such as shown in FIG. 6 may also be set in relay-limiting management module 32 of reception mail server 30 as described above based on the state of management in operation management module 12, the state of management in non-contact IC management module 13, the timer set times in timer management module 14, or the schedules managed in schedule management module 15.

For example, when based on the management state in operation management module 12, the input of information to mobile terminal 10-2 may be taken as a trigger whereby a reception-limiting start notification and a reception-limiting release notification are transmitted to reception mail server 30 from reception-limiting notification module 17 of mobile terminal 10-2. A configuration is possible in which the items of information that are applied as input to mobile terminal 10-2 for initiating the transmission of a reception-limiting start notification and a reception-limiting release notification from reception-limiting notification module 17 are set in advance as different items, or in which a reception-limiting start notification and reception-limiting release notification are transmitted from reception-limiting notification module 17 of mobile terminal 10-2 to reception mail server 30 when any item of information is applied as input.

A configuration may also be adopted in which the reception-limiting start notification and reception-limiting release notification are transmitted from reception-limiting notification module 17 of mobile terminal 10-2 to reception mail server 30 at the timing of the start or end of an operation upon mobile terminal 10-2. In such a case, a reception-limiting start notification may be transmitted from reception-limiting notification module 17 to reception mail server 30 when the screen of mobile terminal 10-2 changes from a standby screen upon the start of a prescribed operation by a user on mobile terminal 10-2, following which a reception-limiting release notification may be transmitted from reception-limiting notification module 17 to reception mail server 30 when the screen of mobile terminal 10-2 changes back to the standby screen upon completion of this operation.

Alternatively, notifications may also be sent based on the management state in non-contact IC management module 13. In this case, non-contact IC management module 13 recognizes that a location has been entered by means of a non-contact IC function at the time of boarding a train, i.e., when passing through a ticket gate, whereupon a reception-limiting start notification is transmitted from reception-limiting notification module 17 to reception mail server 30. Subsequently, non-contact IC management module 13 recognizes that the user has left the location by means of the non-contact IC function at the time of leaving the train, i.e., when again passing through the ticket gate, whereupon a reception-limiting release notification is transmitted from reception-limiting notification module 17 to reception mail server 30. In the case of a movie theater or concert hall, non-contact IC management module 13 may also recognize a user's entrance to or exit from a location by means of the non-contact IC function, and based on this entrance or exit, a reception-limiting start notification or reception-limiting release notification may be transmitted from reception-limiting notification module 17 to reception mail server 30.

When based on the timer set times in timer management module 14, a reception-limiting start notification may be transmitted from reception-limiting notification module 17 to reception mail server 30 at the ON time that has been set in Step 24d of FIG. 3, following which a reception-limiting release notification may be transmitted from reception-limiting notification module 17 to reception mail server 30 at the OFF time of the timer.

When based on a schedule managed in schedule management module 15, a reception-limiting start notification may be transmitted from reception-limiting notification module 17 to reception mail server 30 at the start time of a predetermined schedule among the schedules managed in schedule management module 15, and a reception-limiting release notification may be transmitted from reception-limiting notification module 17 to reception mail server 30 at the end time of the predetermined schedule.

Explanation next regards the process when electronic mail is transmitted from mobile terminal 10-1 to mobile terminal 10-2 in the mobile communication system shown in FIG. 1. The mail address of mobile terminal 10-1 is here assumed to be 111@Imn.ne.jp and the mail address of mobile terminal 10-2 is assumed to be aaa@abc.ne.jp.

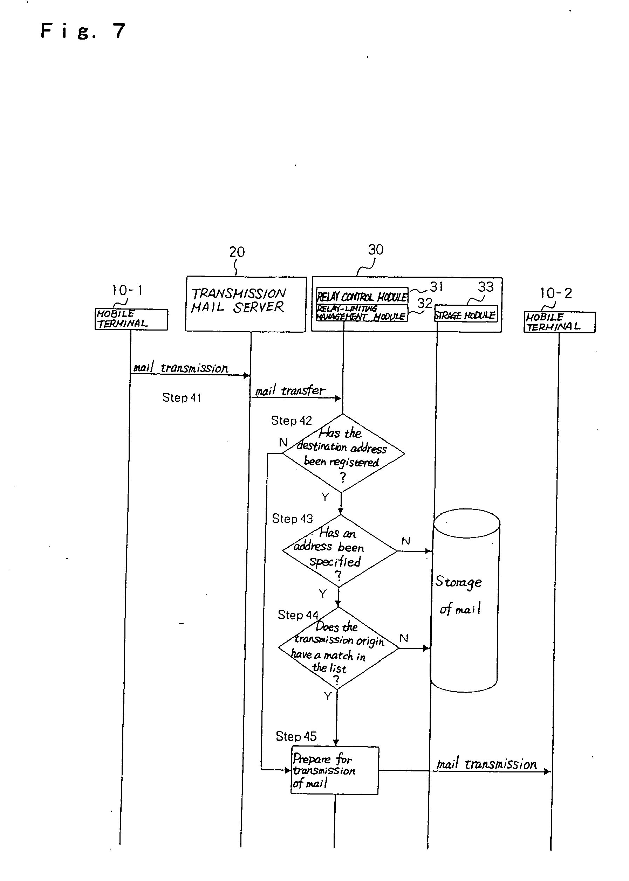

FIG. 7 is a view for explaining the process when electronic mail is transmitted from -mobile terminal 10-1 to mobile terminal 10-2 in the mobile communication system shown in FIG. 1.

In Step 41, when electronic mail is transmitted from mobile terminal 10-1 to mobile terminal 10-2, the transmitted electronic mail is transmitted to reception mail server 30 by way of transmission mail server 20.

In reception mail server 30, a check is first carried out in Step 42 in relay control module 31 using a reception-limiting list such as shown in FIG. 6 that is managed in relay-limiting management module 32 to verify whether mobile terminal 10-2 that is the transmission destination of the electronic mail has set reception limiting. In the present embodiment, the address aaa@abc.ne.jp of mobile terminal 10-2 is registered as a limiter's address. If this address is not registered, no limitations are placed on reception of electronic mail and the electronic mail is therefore immediately transmitted.

In Step 43, relay control module 31 in reception mail server 30 next uses the reception-limiting list shown in FIG. 6 to check for the existence of reception-permitted addresses that have been registered in association with the mail address of mobile terminal 10-2. In the present embodiment, several addresses are registered as reception-permitted addresses. However, if no addresses are registered, the electronic mail is saved in storage module 33 in reception mail server 30.

In Step 44, relay control module 31 of reception mail server 30 uses the reception-limiting list shown in FIG. 6 to check whether the mail address of mobile terminal 10-1, which is the transmission origin of the electronic mail, has been registered as a reception-permitted address. In the present embodiment, the address of mobile terminal 10-1 111@Imn.ne.jp is registered as a reception-permitted address. However, if the address is not registered, the electronic mail is saved in storage module 33 in reception mail server 30.

Then, in Step 45, relay control module 31 of reception mail server 30 transmits the electronic mail from mobile terminal 10-1 to mobile terminal 10-2.

### Another Embodiment

A configuration may be adopted in which reception-permitted addresses are not set when the user wishes to use the device for purposes other than communication such as for a clock in cases such as in a movie theater in which the public is expected to turn OFF the power supply.

Alternatively, the present invention can also be applied for cases in which limiting is necessary due to personal circumstances in which the user does not wish his or her privacy to be disturbed, such as when studying or during a test.

The present invention can also be applied for cases in which limiting is necessary in daily life, such as when the user is at work, in classes, or sleeping.

By means of the above-described configuration, the present invention enables the limiting of reception when the user wishes to place limitations on reception due to the state of the terminal without requiring the user to turn OFF the power supply of the mobile terminal, and further, enables the reception of electronic mail from partners of the user's choosing.

While a preferred embodiment of the present invention has been described using specific terms, such description is for illustrative purposed only, and it is to be understood that changes and variations may be made without departing from the sprit or scope of the following claims.

## Claims

1. A mobile communication system, comprising:
a plurality of mobile terminals; and
a mail server for relaying electronic mail that is transmitted and received among said plurality of mobile terminals;
wherein each of said mobile terminals includes:
reception-limiting control means for managing mail addresses of electronic mail for which reception is permitted according to conditions that are set; and
reception-limiting notification means for transmitting to said mail server a reception-limiting start notification together with the mail address of the relevant mobile terminal and mail addresses that are managed in said reception-limiting control means when said conditions have been satisfied, and transmitting to said mail server a reception-limiting release notification together with the mail address of the relevant mobile terminal when said conditions are no longer satisfied;
said mail server includes:
a relay-limiting management means for managing by placing in correspondence in a reception-limiting list: as a limiter's address, the mail address of said mobile terminal that was transmitted together with said reception-limiting start notification from said reception-limiting notification means, and as reception-permitted addresses, mail addresses that are managed by said reception-limiting control means and that were transmitted in together with said reception-limiting start notification; and
a relay control means for, when the mail address of a transmission destination of electronic mail that has been transmitted in from said mobile terminals is managed in said reception-limiting list as said limiter's address, transmitting the electronic mail to the mobile terminal of the transmission destination only when the mail address of the transmission origin of the electronic mail is managed as said reception-permitted address that has been placed in correspondence with said limiter's address in said reception-limiting list; and
said relay-limiting management means, when a reception-limiting release notification has been transmitted in from said reception-limiting notification means, deletes the mail address of the mobile terminal that was transmitted in together with the reception-limiting release notification and the reception-permitted addresses that were placed in correspondence with that mail address from the reception-limiting list.

2. A mobile communication system according to claim 1, wherein:
when the mail address of the transmission destination of electronic mail that has been transmitted in from said mobile terminals is managed in said reception-limiting list as said limiter's address, and moreover, when the mail address of the transmission origin of that electronic mail is not managed as said reception-permitted address that has been placed in correspondence with said limiter's address in said reception-limiting list, said relay control means saves the electronic mail; and when said reception-limiting release notification is transmitted in from said reception-limiting notification means, said relay control means transmits said saved electronic mail to the mobile terminal of the transmission destination.

3. A mobile communication system according to claim 1, wherein:
said mobile terminals each include a remaining battery power management means for monitoring remaining battery power, notifying said reception-limiting notification means when the remaining battery power has fallen below a predetermined threshold value, and further, notifying said reception-limiting notification means when charging starts; and
said reception-limiting notification means transmits said reception-limiting start notification to said mail server when notified from said remaining battery power management means that the remaining battery power has fallen below a predetermined threshold value, and transmits said reception-limiting release notification to said mail server when notified from said remaining battery power management means that charging has started.

4. A mobile communication system according to claim 1, wherein:
each of said mobile terminals includes an operation management means for managing operations on that mobile terminal; and
said reception-limiting notification means transmits said reception-limiting start notification to said mail server when notified from said operation management means that a first item of information has been applied as input to the relevant mobile terminal, and transmits said reception-limiting release notification to said mail server when notified from said operation management means that a second item of information has been applied as input to the relevant mobile terminal.

5. A mobile communication system according to claim 1, wherein:
each of said mobile terminals includes an operation management means for managing operations upon that mobile terminal; and
said reception-limiting notification means transmits said reception-limiting start notification to said mail server when notified from said operation management means of the start of a prescribed operation upon that mobile terminal and transmits said reception-limiting release notification to said mail server when notified from said operation management means of the completion of said prescribed operation.

6. A mobile communication system according to claim 1, wherein:
each of said mobile terminals includes a non-contact IC management means for managing entrance to and exit from a location by means of non-contact communication; and
said reception-limiting notification means transmits said reception-limiting start notification to said mail server when notified from said non-contact IC management means of entrance to a location and transmits said reception-limiting release notification to said mail server when notified from said non-contact IC management means of exit from the location.

7. A mobile communication system according to claim 1, wherein:
each of said mobile terminals includes a timer management means for managing the ON and OFF of a timer; and
said reception-limiting notification means transmits said reception-limiting start notification to said mail server at the ON timing of the timer that is managed in said timer management means and transmits said reception-limiting release notification to said mail server at the OFF timing of the timer that is managed in said timer management means.

8. A mobile communication system according to claim 1, wherein:
each of said mobile terminals includes a schedule management means for managing schedules; and
said reception-limiting notification means transmits said reception-limiting start notification to said mail server at the start of a schedule that has been determined in advance among schedules that are managed in said schedule management means and transmits said reception-limiting release notification to said mail server at the completion of said predetermined schedule.

9. A mobile communication system according to claim 8, wherein:
said reception-limiting control means manages the mail addresses of electronic mail for which reception is permitted according to a schedule managed in said schedule management means.

10. A mobile terminal for transmitting and receiving electronic mail that is relayed by a mail server, said mobile terminal comprising:
a reception-limiting control means for managing mail addresses of electronic mail for which reception is permitted according to conditions that are set; and
a reception-limiting notification means for transmitting to said mail server a reception-limiting start notification together with the mail address of that mobile terminal and mail addresses that are managed in said reception-limiting control means when said conditions are satisfied, and transmitting to said mail server a reception-limiting release notification together with the mail address of that mobile terminal when said conditions are no longer satisfied.

11. A mobile terminal according to claim 10, further comprising:
a remaining battery power management means for monitoring remaining battery power, notifying said reception-limiting notification means when the remaining battery power has fallen below a predetermined threshold value, and notifying said reception-limiting notification means when charging starts;
wherein said reception-limiting notification means transmits said reception-limiting start notification to said mail server when notified from said remaining battery power management means that the remaining battery power has fallen below the predetermined threshold value, and transmits said reception-limiting release notification to said mail server when notified from said remaining battery power management means that charging has started.

12. A mobile terminal according to claim 10, further comprising:
an operation management means for managing operations upon said mobile terminal;
wherein said reception-limiting notification means transmits said reception-limiting start notification to said mail server when notified from said operation management means that a first item of information has been applied as input to said mobile terminal, and transmits said reception-limiting release notification to said mail server when notified from said operation management means that a second item of information has been applied as input to said mobile terminal.

13. A mobile terminal according to claim 10, further comprising:
an operation management means for managing operations upon said mobile terminal;
wherein said reception-limiting notification means transmits said reception-limiting start notification to said mail server when notified from said operation management means of the start of a prescribed operation upon said mobile terminal, and transmits said reception-limiting release notification to said mail server upon notification from said operation management means of completion of said prescribed operation.

14. A mobile terminal according to claim 10, further comprising:
a non-contact IC management means for managing entrance to and exit from locations by means of non-contact communication;
wherein said reception-limiting notification means transmits said reception-limiting start notification to said mail server when notified from said non-contact IC management means of the entrance to a location, and transmits said reception-limiting release notification to said mail server when notified from said non-contact IC management means of the exit from the location.

15. A mobile terminal according to claim 10, further comprising:
a timer management means for managing the ON and OFF of a timer;
wherein said reception-limiting notification means transmits said reception-limiting start notification to said mail server at the ON timing of the timer that is managed in said timer management means, and transmits said reception-limiting release notification to said mail server at the OFF timing of the timer that is managed in said timer management means.

16. A mobile terminal according to claim 10, further comprising:
a schedule management means for managing schedules;
wherein said reception-limiting notification means transmits said reception-limiting start notification to said mail server at the start time of a schedule that has been determined in advance among schedules managed in said schedule management means, and transmits said reception-limiting release notification to said mail server at the completion of said predetermined schedule.

17. A mobile terminal according to claim 16, wherein:
said reception-limiting control means manages the mail addresses of electronic mail for which reception is permitted according to the schedule that is managed in said schedule management means.

18. A mail server for relaying electronic mail that is transmitted and received among a plurality of mobile terminals, said mail server comprising:
a relay-limiting management means for managing, as a limiter's address, of two mail addresses that are transmitted in from said mobile terminal together with a reception-limiting start notification that is transmitted in from said mobile terminal when conditions that have been set in said mobile terminal have been satisfied, the mail address of the mobile terminal, for managing, as a reception-permitted address, the other mail address that is transmitted in together with said reception-limiting start notification, said relay-limiting management means managing these addresses in association with each other in a reception-limiting list; and
a relay control means for, when the mail address of the transmission destination of electronic mail transmitted in from said mobile terminal is managed in said reception-limiting list as said limiter's address, transmitting that electronic mail to the mobile terminal of the transmission destination only when the mail address of the transmission origin of that electronic mail is managed as said reception-permitted address in association with said limiter's address in said reception-limiting list;
wherein, when a reception-limiting release notification is transmitted in from the mobile terminal when said conditions are no longer satisfied in said mobile terminal, said relay-limiting management means deletes from said reception-limiting list the mail address of the mobile terminal that has been transmitted in together with that reception-limiting release notification and the reception-permitted addresses that are placed in correspondence with that mail address.

19. A mail server according to claim 18, wherein:
said relay control means saves electronic mail that is transmitted in from said mobile terminal when the mail address of the transmission destination of the electronic mail is managed as said limiter's address in said reception-limiting list, and moreover, when the mail address of the transmission origin of the electronic mail is not managed as said reception-permitted address in correspondence with said limiter's address in said reception-limiting list; and
said relay control means transmits said saved electronic mail to the mobile terminal of the transmission destination when said reception-limiting release notification is transmitted in from said mobile terminal.

20. An electronic mail reception-limiting method in a mobile communication system that is made up from a plurality of mobile terminals and a mail server for relaying electronic mail that is transmitted and received among said plurality of mobile terminals, said electronic mail reception-limiting method comprising:
a step wherein said mobile terminals manage mail addresses of electronic mail for which reception is permitted according to conditions that have been set;
a step wherein a said mobile terminal transmits to said mail server a reception-limiting start notification together with the mail address of that mobile terminal and mail addresses that have been managed in said mobile terminal when said conditions have been satisfied;
a step wherein said mail server manages, as a limiter's address, the mail address of said mobile terminal that is transmitted in together with said reception-limiting start notification from said mobile terminal, and manages, as reception-permitted addresses, mail addresses that were managed in said mobile terminal and that were transmitted in together with said reception-limiting start notification; said mail server managing these addresses in association with each other in a reception-limiting list;
a step wherein, when the mail address of the transmission destination of electronic mail that has been transmitted in from said mobile terminals is managed in said reception-limiting list as said limiter's address, said mail server transmits the electronic mail to the mobile terminal of the transmission destination only when the mail address of the transmission origin of the electronic mail is managed as said reception-permitted address in association with said limiter's address in said reception-limiting list;
a step wherein said mobile terminal transmits to said mail server a reception-limiting release notification together with the mail address of that mobile terminal when said conditions are no longer satisfied; and
a step wherein said mail server, when said reception-limiting release notification is transmitted in from said mobile terminal, deletes from said reception-limiting list the mail address of the mobile terminal that has been transmitted in together with said reception-limiting release notification and the reception-permitted addresses that have placed in association with that mail address.

21. An electronic mail reception-limiting method according to claim 20, further comprising:
a step wherein, when the mail address of the transmission destination of electronic mail that has been transmitted in from said mobile terminal is managed as said limiter's address in said reception-limiting list, and moreover, when the mail address of the transmission origin of that electronic mail is not managed as said reception-permitted address in association with said limiter's address in said reception-limiting list, said mail server saves the electronic mail; and
a step wherein, when said reception-limiting release notification is transmitted in from said mobile terminal, said mail server transmits said saved electronic mail to the mobile terminal of the transmission destination.

22. An electronic mail reception-limiting method according to claim 20, further comprising:
a step wherein said mobile terminal monitors remaining battery power and transmits said reception-limiting start notification to said mail server when the remaining battery power falls below a predetermined threshold value; and
a step wherein said mobile terminal transmits said reception-limiting release notification to said mail server when charging is started.

23. An electronic mail reception-limiting method according to claim 20, further comprising:
a step wherein said mobile terminal transmits said reception-limiting start notification to said mail server when a first item of information is applied as input to that mobile terminal; and
a step wherein said mobile terminal transmits said reception-limiting release notification to said mail server when a second item of information is applied as input to that mobile terminal.

24. An electronic mail reception-limiting method according to claim 20, further comprising:
a step wherein said mobile terminal transmits said reception-limiting start notification to said mail server at the start of a prescribed operation upon that mobile terminal; and
a step wherein said mobile terminal transmits said reception-limiting release notification to said mail server upon the completion of said prescribed operation.

25. An electronic mail reception-limiting method according to claim 20, further comprising:
a step wherein said mobile terminal transmits said reception-limiting start notification to said mail server upon recognizing entrance to a location by means of a non-contact IC function; and
a step wherein said mobile terminal transmits said reception-limiting release notification to said mail server upon recognizing the exit from a location by means of said non-contact IC function.

26. An electronic mail reception-limiting method according to claim 20, further comprising:
a step wherein said mobile terminal transmits said reception-limiting start notification to said mail server at the ON timing of a timer that is managed by a timer management means that manages the ON and OFF of the timer; and
a step wherein said mobile terminal transmits said reception-limiting release notification to said mail server at the OFF timing of the timer that is managed by said timer management means.

27. An electronic mail reception-limiting method according to claim 20, further comprising:
a step wherein said mobile terminal transmits said reception-limiting start notification to said mail server at the start time of a schedule that has been determined in advance among schedules that are managed in a schedule management means for managing schedules; and
a step wherein said mobile terminal transmits said reception-limiting release notification to said mail server at the completion of said predetermined schedule.

28. An electronic mail reception-limiting method according to claim 27, wherein:
said mobile terminal manages the mail addresses of electronic mail for which reception is permitted according to a schedule that is managed in said schedule management means.
